# FASCICULE DE BREVET EUROPEEN

(11) **EP 0 480 798 B1**
(45) Date de publication et mention de la délivrance du brevet: **25.01.1995**
(21) Numéro de dépôt: 91402627.3
(22) Date de dépôt: 02.10.1991
(51) Int. Cl.: A61D 19/00, A61J 1/10

(54) **Bande de sachets-doses pour semence animale destinée à l'insémination artificielle, machine de conditionnement de ce sachet-dose**
Band von Portionsbeuteln für tierischen Samen zur künstlichen Besamung, Vorrichtung zur Konditionierung dieses Portionsbeutels
Band of dose-bags for animal semen intended for artificial insemination, conditioning machine for this bag

(30) Priorité: 09.10.1990 FR 9012427
(43) Date de publication de la demande: 15.04.1992
(60) Demande divisionnaire: 94400571.9
(73) Titulaire: Cassou, Robert, F-61300 L'Aigle (FR); Cassou, Maurice, F-61300 L'Aigle (FR); Cassou, Bertrand, F-61300 L'Aigle (FR)
(72) Inventeur: Cassou, Robert, F-61300 L'Aigle (FR); Cassou, Maurice, F-61300 L'Aigle (FR); Cassou, Bertrand, F-61300 L'Aigle (FR)
(74) Mandataire: Rodhain, Claude

(56) Documents cités:
- EP-A- 0 096 191
- EP-A- 0 148 473
- EP-A- 0 189 702
- DE-A- 2 701 998
- DE-A- 3 820 387
- FR-A- 2 524 303
- FR-A- 2 627 128

## Description

L'invention concerne l'insémination artificielle des animaux et plus précisément une bande de sachets-doses et une machine de conditionnement pour ces sachets-doses.

L'insémination artificielle des porcins exige une quantité de semence de l'ordre de 125 cm³. La semence est transférée dans le vagin de la truie par l'intermédiaire d'une sonde d'insémination adaptée à un orifice d'un récipient contenant cette dose de semence.

Ces récipients existent à l'heure actuelle sous plusieurs formes différentes.

Par exemple, les doses peuvent être contenues dans un flacon, réalisé par extrudogonflage, en matière thermoplastique souple ou semi-rigide à soufflet, destiné à être fermé par un bouchon moulé vissable et adapté à recevoir une canule de raccordement ; un tel flacon pèse environ une quinzaine à une vingtaine de grammes.

Le conditionnement de ces flacons, après une distribution manuelle, peut être effectué soit également manuellement par gravité à partir d'une vanne disposée à la base d'une réserve de semence, ou semi-automatiquement au moyen d'une pompe péristaltique délivrant le volume de semence prédéterminé ; la fermeture du flacon est manuelle par simple vissage du bouchon.

On connaît également des récépients souples de forme générale tronconique réalisés aussi en matière thermoplastique par extrudogonflage ; ces récipients comportent une canule incorporée ; le fond, initialement ouvert, est scellé par soudure après remplissage ; leur poids est inférieur à 10g.

Avant conditionnement, ces récipients tronconiques sont emboîtés l'un dans l'autre à mi-hauteur, ce qui diminue l'encombrement et facilite la distribution ; cette distribution est semi-automatique : les tubes étant disposés emboîtés par quantités et placés verticalement dans les distributeurs, manuellement, fond ouvert vers le haut, le remplissage du récipient supérieur est effectué au moyen d'une pompe péristaltique, puis l'on procède par pincement et soudure de la paroi supérieure, à un scellement qui est automatique. Le fait que le tube soit ouvert et que le remplissage soit effectué par écoulement vertical à l'air libre expose la semence diluée aux contaminations.

Il existe aussi des récipients sous la forme de sachets souples individuels comportant un embout en tube souple rapporté soudé.

Cette technique grève assez sensiblement le prix de revient et ne permet pas d'automatisation. En effet, avec les sachets souples connus et leurs tubes souples rapportés soudés, la distribution ne peut guère être que manuelle ; le remplissage, s'il est effectué par gravité, est lui-même manuel et dans ce cas fort lent ; si le remplissage est effectué au moyen d'une pompe péristaltique, il est semi-automatique mais de toute manière le scellement par soudure du sachet sous forme de tube souple ou l'obturation de ce sachet par un bouchon est également manuel.

L'utilisation des pompes péristaltiques a pour inconvénient que celles-ci laminent une proportion non négligeable des spermatozoïdes.

Dans tous les cas, flacons à vis souples ou semi-rigides à soufflet, récipients tronconiques souples ou sachets, la canule, l'embout ou le conduit normalement obturés sont ouverts par découpe de l'extrémité bouchée, avant leur raccordement sur la sonde d'insémination. L'étanchéité et le maintien sont obtenus par emboîtement serré interne ou externe de la canule ou de l'embout issu de la dose sur l'extrémité libre de la sonde d'insémination.

Dans le cas des flacons et des récipients tronconiques souples, l'expulsion de la semence diluée s'effectue par pression de la main et écrasement progressif. Pour obtenir un vidage complet, deux opérations avec reprise d'air sont nécessaires.

Dans le cas des sachets, le vidage est naturel par action combinée de la pression atmosphérique, du tractus génital de la truie, et du sachet dont l'état initial est plat sans volume réservé et sans contrainte du remplacement d'un volume de liquide par le même volume d'air.

Les sondes d'insémination destinées à être adaptées à ces récipients sont extrêmement variées.

La plupart de ces sondes, tubulaires, ont une forme générale cylindrique à section droite circulaire et présentent un diamètre extérieur de 5 à 14 mm et un diamètre intérieur de 3 à 6 mm. L'une des extrémités de la sonde est adaptée à la conformation des voies génitales de la truie ; l'autre extrémité est comme on l'a vu réalisée de manière à être adaptable par emboîtement avec la canule ou l'embout du récipient contenant la semence ; la longueur de ces sondes est de l'ordre d'une cinquantaine de centimètres. L'extrémité destinée à être introduite dans le vagin de la truie, dite "extrémité fonctionnelle", se présente généralement sous la forme d'un moulage de caoutchouc ou d'élastomère présentant une sorte de pas de vis à gauche, ou encore d'un moulage d'un tampon mousse souple.

Sur cette base, il existe des sondes très élaborées, d'un prix élevé, destinées à des usages multiples pour des raisons de rentabilité et imposant à cette fin des lavages très soigneux sans que puissent être écartés complètement les risques de contamination ; il existe également des sondes simples, du type jetable parce que fabriquées automatiquement avec un minimum de matière peu coûteuse, et dont le prix doit nécessairement être sensiblement inférieur au coût de relavage. Dans les deux cas, le conduit intérieur de la sonde est ouvert aux deux extrémités, ce qui pose des problèmes en ce qui concerne leur nécessaire maintien à l'état stérile.

Le document EP-A-0 096 191 montre une bande de sachets-doses accolés en matière thermoplastique souple et disposés en succession dans le sens longitudinal de la bande, ladite bande étant constituée d'une gaine aplatic dont les parois latérales sont constituées d'un film composite formé de feuilles superposées et les parois sont fixées l'une contre l'autre par un cordon de soudure déterminant un conduit de remplissage. De plus, le fascicule EP-A-0 096 191 décrit une machine de conditionnement de sachets-doses en matière thermoplastique souple pour l'insémination artificielle animale, comportant un dispositif de remplissage des sachets et un dispositif de soudure pour réaliser la scellement des sachets après leur remplissage.

L'invention a pour but de remédier aux inconvénients des techniques antérieures et plus particulièrement de créer un sachet-dose du type jetable présentant à vide un encombrement minimal, économique car fabriqué avec une faible quantité de matière plastique peu coûteuse au moyen d'une technique aisée et automatisable, de conception simple et sans tube de raccordement rapporté soudé, qui puisse être associé à d'autres sachets identiques dans une disposition en chapelet permettant une automatisation totale depuis la distribution des feuilles de matière plastique jusqu'à la fabrication du sachet et à son remplissage.

L'invention a également pour but de permettre un remplisage volumétrique du sachet qui soit rapide et automatique à l'abri de l'air et des contaminations, l'accouplement du sachet et de la sonde avant l'insémination avec un maintien et une étanchéité assurés de manière fiable, une obturation du conduit de la sonde aux deux extrémités limitant l'introduction de cellules étrangères dans l'utérus, et un vidage naturel du sachet complet à l'abri de l'air et des contaminations.

A cet effet, l'invention concerne une bande de sachets-doses accolés en matière thermoplastique souple pour l'insémination artificielle animale et disposés en succession dans le sens longitudinal de la bande, ladite bande étant constituée uniquement de deux feuilles de matière thermoplastique souple fixées l'une à l'autre par des cordons de soudure délimitant chacun une poche suivant un tracé quasi-fermé dont l'un des petits côtés est interrompu, le cordon de soudure déterminant en partant de l'interruption de ce petit côté un conduit de remplissage prolongé par un cône de centrage, les deux feuilles de matière thermoplastique souple étant percées, à l'extérieur de chaque tracé formé par le cordon de soudure, de trous d'entraînement, et les sachets étant séparés partiellement par une prédécoupe unique s'étendant sur une partie de la largeur de la bande pour permettre des déformations des sachets, notamment lors de leur remplissage, sans modification sensible des entr'axes des trous dans le sens longitudinal par rapport à la bande.

L'invention concerne également une machine de conditionnement de sachets-doses en matière thermoplastique souple pour l'insémination artificielle animale, comportant un dispositif de remplissage des sachets et un dispositif de soudure pour réaliser le scellement des sachets après leur remplissage, caractérisée en ce qu'elle comprend un dévidoir portant une bande de sachets vides enroulée, un tambour de distribution recevant cette bande laquelle est solidarisée au tambour de distribution par des doigts d'entraînement, un tambour de récupération pour recevoir les sachets remplis muni également de doigts d'entraînement et de plus d'organes de découpe pour séparer les sachets remplis, et entre le rouleau de distribution et le rouleau de récupération, ledit dispositif de remplissage et ledit dispositif de soudure, le dispositif de remplissage comportant deux éléments de guide déterminant entre eux un couloir dans lequel la bande est positionnée et défile lorsqu'elle est entraînée par les tambours, présentant deux largeurs correspondant respectivement à l'épaisseur du sachet plein et à l'épaisseur de la bande formant le sachet avec un jeu permettant le déplacement de la bande, les deux éléments de guide déterminant également un logement adapté à recevoir un tube de remplissage du sachet.

D'autres caractéristiques et avantages de l'invention ressortiront de la description qui va suivre, donnée à titre d'exemple non limitatif en référence aux dessins annexés dans lesquels :

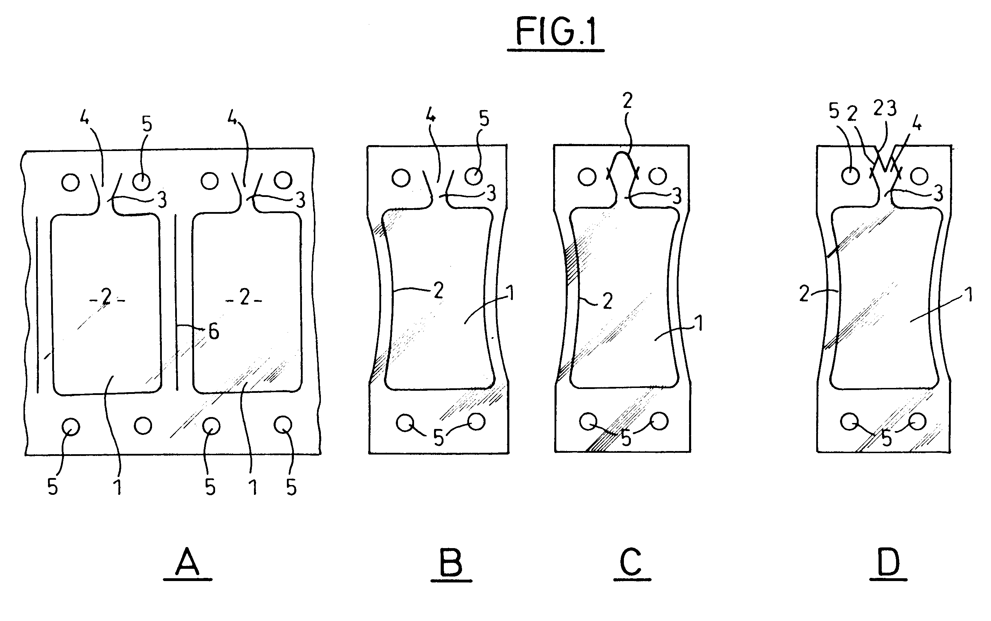

- les figures 1A, B, C, D sont des vues de face montrant les formes successives prises par un sachet-dose selon l'invention de sa fabrication à son utilisation,

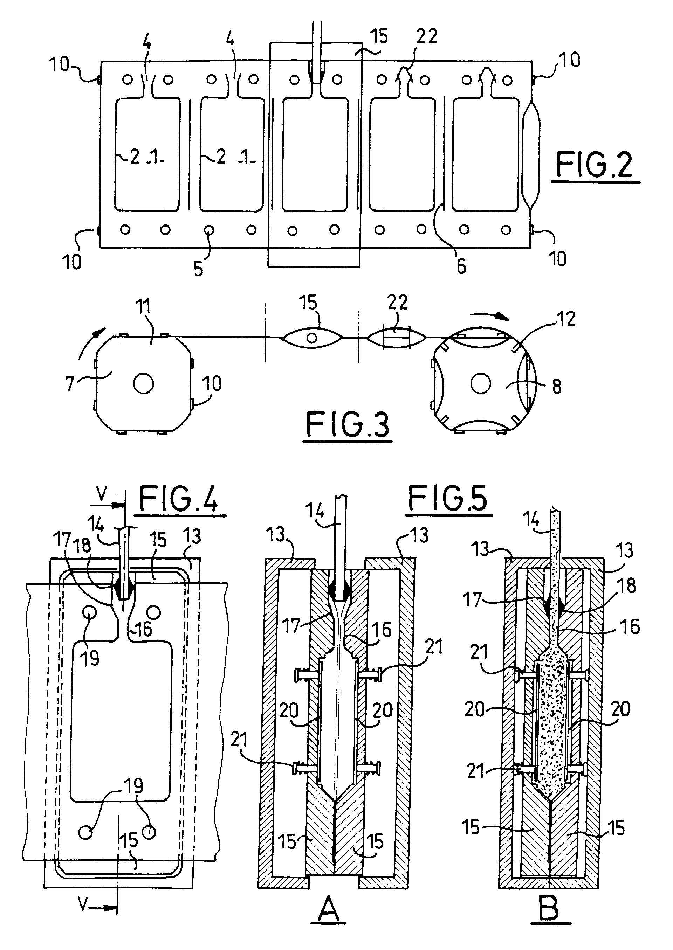

- la figure 2 est une vue montrant schématiquement les phases du conditionnement d'un sachet-dose vu de face au moyen d'une installation de fabrication selon l'invention,
- la figure 3 est une vue correspondant à la figure 2 et montrant les sachets observés du dessus,
- la figure 4 est une vue de face plus détaillée montrant une phase de la fabrication d'un sachet-dose selon l'invention,
- la figure 5A est une section selon la ligne V-V de la figure 4,
- la figure 5B est une section similaire montrant une phase ultérieure de la fabrication.

Les sachets-doses 1 selon l'invention étant destinés à défiler dans la machine de conditionnement sous la forme d'une bande présentant une succession de poches formées le long de cette bande initialement stockée en rouleau ; à cette fin, ils sont réalisés à partir de deux feuilles superposées de matière thermoplastique souple légère réunies par des cordons de soudure dont le tracé définissant la forme de la poche sera précisé dans la suite. Les feuilles souples et minces de matière thermoplastique sont des monocouches ou des complexes adaptés à la soudure thermique étanche, de préférence stérilisables par rayonnement gamma, indemnes de constituants migrants toxiques, imperméables à la lumière et aux rayons ultraviolets, et imprimables ; le poids unitaire d'un sachet est de 2,5g environ.

Tandis que les sachets ont à vide une forme rectangulaire, le cordon de soudure 2 s'étend de manière à déterminer un contour de poche de forme générale également rectangulaire mais dont l'un des petits côtés est interrompu, le cordon déterminant en partant de l'interruption un conduit 3 prolongé par un cône de centrage 4 allant en s'évasant ; les angles du rectangle sont arrondis.

Des trous 5 équidistants se succèdent à proximité des deux bords longitudinaux des bandes à l'extérieur du tracé fermé formé par le cordon de soudure ; leur rôle sera précisé par la suite.

Une prédécoupe 6 s'étendant seulement sur une partie de la largeur de la bande et déterminant la largeur du sachet rectangulaire, réalisée avant remplissage, permet lors de ce remplissage une modification locale de cette largeur et de l'épaisseur du sachet sans modification sensible des entraxes des trous 5 dans le sens longitudinal par rapport à la bande.

La machine de fabrication de ces sachets reliés en bande opère donc tout d'abord la distribution et le déroulage en parallèle de deux feuilles prédécoupées à la largeur désirée pour la bande et le reconditionnement en rouleaux, réalise les cordons de soudure au moyen de mâchoires chauffantes de manière à réaliser le contour des poches en réunissant les deux feuilles, et effectue le découpage équidistant des trous 5 et des prédécoupes 6 séparant partiellement les sachets.

La machine de conditionnement, généralement séparée, est destinée à équiper les laboratoires de préparation de semence porcine diluée.

Elle comporte, alimenté par un dévidoir (non représenté) sur lequel est monté un rouleau de bande de sachets vides identiques de longueur correspondant à la séquence de conditionnement, un tambour de distribution 7 de la bande de sachets vides, et un tambour de récupération 8 des sachets pleins, présentant des axes longitudinaux parallèles orientés dans une direction telle que les sachets soient transférés dans une position permettant aisément leur remplissage, du tambour de distribution 7 au tambour de récupération 8. L'angle d'inclinaison de la bande dans la machine déterminé par l'inclinaison des tambours est de préférence approximativement de 30 degrés par rapport à l'horizontale. Un mécanisme d'entraînement non représenté provoque une rotation de 90 degrés simultanée des deux tambours à chaque cycle. A cette fin, les tambours comportent quatre faces à 90 degré munies chacune de quatre doigts d'entraînement 10 destinés à pénétrer dans les trous 5 de la bande de sachets pour assurer le positionnement de ceux-ci. Tandis que les faces du tambour de distribution sont planes, celles du tambour de récupération sont concaves de façon à permettre le logement des sachets gonflés par leur contenu.

Une étiqueteuse prévue au niveau des faces du tambour de distribution 7 appose en un emplacement 11 un repère d'identification automatique des sachets.

Un dispositif de découpe schématisé par des organes de découpe 12 tels que des lames de découpe, prévus à la périphérie du tambour de récupération 8, réalise la séparation automatique des sachets en prolongeant de part et d'autre la prédécoupe 6.

Un dispositif de remplissage et un dispositif de soudure se succèdent entre les deux tambours 7, 8.

Le dispositif de remplissage comporte deux coquilles creuses 13 disposées vis-à-vis et mobiles dans un mouvement de va-et-vient l'une en direction de l'autre. La position ouverte (figures 4 et 5A) réserve un espace libre légèrement supérieur à l'encombrement d'un sachet rempli. La position fermée (figure 5B) crée une enceinte rectangulaire par application des deux coquilles 13 l'une contre l'autre et pincement de la bande au niveau du plan de distribution de celle-ci.

Un passage est réservé dans les coquilles 13 pour un tube de remplissage 14. Une étanchéité partielle est suffisante.

Un guide constitué de deux éléments 15 symétriques disposés vis-à-vis forme un couloir à deux largeurs, à savoir un couloir central dont la largeur correspond à l'épaisseur du sachet rempli, et deux couloirs latéraux dont la largeur correspond à l'épaisseur de la bande avec le jeu nécessaire au défilement des deux parties latérales continues de cette bande. Aux deux extrémités du couloir, les deux éléments 15 du guide sont en contact et solidarisés par vissage. La hauteur des couloirs correspond à la largeur de la bande avec le jeu nécessaire au défilement.

Dans l'alignement du passage prévu dans les coquilles 13 pour le tube de remplissage 14, un logement cylindrique 16 prolongé vers l'extérieur par un cône de raccordement 17 allant en s'évasant est usiné dans le guide en deux éléments 15. Le diamètre du logement 16 et la forme du cône de raccordement 17 correspondent au conduit 3 prolongé par le cône de centrage 4 du sachet ; le cône de raccordement est lui-même prolongé par un logement cylindrique.

Un embout tronconique en matière souple 18 est prévu à l'extrémité du tube de remplissage 14 ; l'ensemble est en position reculée (figures 4 et 5A) pendant les opérations de distribution des sachets, et en position avancée (figure 5B) en pression contre le cône de raccordement 17 pendant l'opération de remplissage.

L'embout conique 18 est mobile dans le grand diamètre cylindrique usiné dans le guide.

En position reculée (figures 4 et 5A), cet embout conique 18 reste engagé entre les deux feuilles constituant la bande. En position avancée (figure 5B) il s'engage dans le cône de centrage 4 du sachet et réalise l'étanchéité par application-déformation du film contre le cône de raccordement 17 du guide.

Le tube de remplissage 14 est raccordé à un réservoir de semence par un tuyau souple pouvant être obturé par une vanne agissant par pincement (non représentés ).

Le positionnement du sachet est effectué par quatre doigts 19 solidaires de l'une des coquilles 13, au moment de la fermeture de celles-ci.

Le couloir central du guide en deux éléments 15 est associé à deux platines de calibrage 20 de l'épaisseur du sachet rempli. Ces platines de calibrage sont montées sur quatre colonnes 21 coulissant chacune dans un élément 15 du guide et associées à des ressorts permettant l'escamotage des platines de calibrage 20 en position coquilles ouvertes et réciproquement. L'espace entre les platines de calibrage est réglable.

Le rôle de ces platines est triple : elles permettent le règlage du volume de liquide par règlage de l'épaisseur du sachet, l'augmentation du volume libre du sachet à l'ouverture des coquilles en vue d'éviter le refoulement, et la fourniture d'une impulsion de contact déterminant la fin de l'opération de remplissage.

L'angle d'inclinaison de 30 degrés par rapport à l'horizontale permet d'étager successivement le volume du sachet 1, le conduit 3, le tube de remplissage 14, et le volume de liquide à conditionner en élévation l'un par rapport à l'autre.

Le processus de remplissage est le suivant :

L'ouverture des coquilles 13 est associée :
- à la mise à l'air libre de l'enceinte formée par ces coquilles,
- à la fermeture de la vanne de communication avec le volume de liquide situé en surélévation,
- au recul du tube de remplissage 14 qui reste toutefois engagé entre les deux feuilles constituant les sachets,
- au défilement de la bande évacuant le sachet rempli sur le poste de soudure qui suit et introduisant un nouveau sachet vide.

La fermeture des coquilles est associée :
- au positionnement du nouveau sachet vide par les doigts 9,
- à l'avance et à l'application du tube de remplissage 14 sur le cône de centrage 4 du sachet contre le cône de raccordement 17 des éléments de guide,
- à l'ouverture de la vanne de communication avec le volume de liquide situé en surélévation,
- à la mise sous vide partiel de l'enceinte formée par les coquilles 13.

Le remplissage est ainsi effectué rapidement sous la double action de la gravité qui s'applique au liquide et de la dépression qui s'applique au sachet.

Le dispositif de soudure comprend deux mâchoires chauffantes 22 réalisant le scellement du sachet par application de ces deux mâchoires chauffantes l'une contre l'autre au niveau du cône de centrage 4. Les mâchoires 22 ont une forme en V renversé sécant avec le cône de centrage 4 de façon à faciliter ultérieurement l'ouverture du sachet par découpe et la mise en place de la sonde à travers cette découpe.

Le dispositif de soudure ferme donc par un segment de soudure en V renversé, le tracé du cordon initial délimitant la poche définie entre les deux feuilles souples, à l'extrémité libre évasée du cône de centrage.

Le cycle global de fonctionnement de la machine de conditionnement se divise donc en deux phases principales :
- rotation des tambours 7, 8 de 90 degrés et avance de la bande pour un sachet de la gauche vers la droite,
- opérations simultanées de remplissage et de soudure.

Ces deux phases principales se succèdent continuellement en étant séparés par deux phases intermédiaires consistant d'une part en l'ouverture des coquilles 13 de remplissage simultanément à l'ouverture des mâchoires 22 de soudure et en la fermeture des coquilles de remplissage simultanément avec la fermeture des mâchoires de soudure.

On peut noter que l'entraxe entre les trous 5 destinés aux doigts d'entraînement 10, 19 est diminué dans le sens transversal par rapport à la bande lorsque le sachet se remplit, ce qui est compensé par une diminution correspondante de l'entraxe de ces doigts 19 au moment du remplissage. Ainsi, les mouvements de distribution transmis par les doigts d'entraînement 19 sont appliqués à la bande de façon équilibrée sur les deux parties latérales continues de la bande, indemnes de découpe et de déformation.

Le sachet ainsi rempli en laboratoire, par la semence diluée, ici de la semence porcine, est distribué et expédié dans les élevages.

L'ouverture est pratiquée au moment de l'insémination par une découpe 23 effectuée par exemple aux ciseaux, découpe en forme de V dont les branches sont sécantes (approximativement perpendiculaires) aux branches du V renversé de la soudure fermant le cône de centrage 4 du sachet. Cette découpe 23 doit être juste suffisante pour le passage d'une sonde d'insémination.

Bien entendu, l'invention n'est pas limitée aux exemples ci-dessus décrits et représentés, et on pourra en prévoir d'autres formes et modes de réalisation sans sortir de son cadre.

## Revendications

1. Bande de sachets-doses accolés en matière thermoplastique souple pour l'insémination artificielle animale et disposés en succession dans le sens longitudinal de la bande, ladite bande étant constituée uniquement de deux feuilles de matière thermoplastique souple fixées l'une à l'autre par des cordons de soudure (2) délimitant chacun une poche suivant un tracé quasi-fermé dont l'un des petits côtés est interrompu, le cordon de soudure déterminant en partant de l'interruption de ce petit côté un conduit (3) de remplissage prolongé par un cône (4) de centrage, les deux feuilles de matière thermoplastique souple étant percées, à l'extérieur de chaque tracé formé par le cordon de soudure (2), de trous (5) d'entraînement, et les sachets étant séparés partiellement par une prédécoupe (6) unique s'étendant sur une partie de la largeur de la bande pour permettre des déformations des sachets, notamment lors de leur remplissage, sans modification sensible des entr'axes des trous (5) dans le sens longitudinal par rapport à la bande.

2. Machine de conditionnement de sachets-doses en matière thermoplastique souple pour l'insémination artificielle animale, comportant un dispositif de remplissage (13 ... 21) des sachets et un dispositif de soudure (22) pour réaliser le scellement des sachets après leur remplissage, caractérisée en ce qu'elle comprend un dévidoir portant une bande de sachets vides enroulée, un tambour de distribution (7) recevant cette bande laquelle est solidarisée au tambour de distribution par des doigts d'entraînement (10), un tambour de récupération (8) pour recevoir les sachets remplis muni également de doigts d'entraînement (10) et de plus d'organes de découpe (12) pour séparer les sachets remplis, et entre le rouleau de distribution (7) et le rouleau de récupération (8), ledit dispositif de remplissage (13, ..., 21) et ledit dispositif de soudure (22), le dispositif de remplissage comportant deux éléments (15) de guide déterminant entre eux un couloir dans lequel la bande est positionnée et défile lorsqu'elle est entraînée par les tambours (7, 8), présentant deux largeurs correspondant respectivement à l'épaisseur du sachet plein et à l'épaisseur de la bande formant le sachet avec un jeu permettant le déplacement de la bande, les deux éléments de guide déterminant également un logement adapté à recevoir un tube de remplissage (14) du sachet (1).

3. Machine selon la revendication 2, caractérisée en ce que le dispositif de remplissage comporte deux coquilles creuses (13) disposées vis-à-vis et mobiles dans un mouvement de va-et-vient en direction l'une de l'autre, les deux éléments (15) de guide déterminant également un logement étagé muni d'un cône de raccordement (17) pour recevoir un tube de remplissage (14) du sachet (1).

4. Machine selon la revendication 2, caractérisée en ce que le dispositif de remplissage comporte deux coquilles (13) à l'intérieur desquelles sont logés lesdits deux éléments (15) de guide respectifs déterminant un couloir à deux largeurs dont la partie de plus grande largeur contient deux platines de calibrage (20) de l'épaisseur du sachet rempli montées sur des colonnes (21) coulissantes portées chacune par un élément de guide et associées à des ressorts d'escamotage des platines de calibrage.

## Claims

1. Strip of interconnected dose bags of flexible thermoplastic material which are intended for animal artificial insemination and which are arranged consecutively in the longitudinal direction of the strip, said strip being formed solely from two sheets of flexible thermoplastic material fastened to one another by means of welds (2), each defining a bag along an almost closed contour, one of the short sides of which contains an opening and from this opening in the short side the weld defines a feed channel (3) extended by a centring cone (4), the two sheets of flexible thermoplastic material being pierced on the outside of each contour formed by the weld (2) by holes (5) for drive means, and the bags are partially separated by a single perforation (6) extending along part of the width of the strip to allow deformation movements of the bags, particularly during filling, without there being any appreciable change in the centre to centre distances between holes (5) longitudinally in relation to the strip.

2. Machine for processing dose bags of flexible thermoplastic material intended for animal artificial insemination, comprising a filling device (13..21) for the bags and a welding device (22) for sealing the bags after they are filled, characterised in that it is provided with a drum holding a rolled strip of empty bags, a supply roller (7) to receive this strip which is located on the supply roller by means of drive pins (10), and a take-up roller (8) to receive the filled bags which is also equipped with drive pins (10) as well as perforating means (12) to separate the filled bags, and in that the filling device (13..21) and the welding device (22) are disposed between the supply roller (7) and the delivery roller (8), the filling device comprising two guide elements (15) defining a passage between them in which the strip is positioned and transported when driven by the rollers (7, 8) and which has two widths corresponding respectively to the thickness of the bag when full and the thickness of the strip forming the bag with sufficient clearance to allow for displacement of the strip, the two guide elements each defining a cavity adapted to receive a filling tube (14) for the bag (1).

3. Machine according to Claim 2, characterised in that the filling device comprises two hollow shells (13) facing one another which may be moved back and forth in relation to one another, the two guide elements (15) also defining a stepped cavity provided with a connection cone (17) to receive a filling tube (14) for the bag (1).

4. Machine according to Claim 2, characterised in that the filling device comprises two shells (13) inside which the two respective guide elements (15) are housed to define a passage with two widths, the wider section of this passage containing two calibration plates (20) to gauge the thickness of the filled bag, these plates being mounted on sliding posts (21) of which each is supported by a guide element (15) and is associated with restoring spring means of the calibration plates.

## Patentansprüche

1. Band von Portionsbeuteln, die aus weichem thermoplastischem Material zu künstlichen Tierbesamung hergestellt und in Längsrichtung des Bandes hintereinander angeordnet sind, wobei das Band aus zwei Folien aus weichem thermoplastischem Material besteht, die durch Schweißnähte (2) miteinander verbunden sind, die jeweils eine Tasche längs einer quasi geschlossenen Bahn begrenzen, deren eine kurze Seite unterbrochen ist, wobei die Schweißnaht, von der Unterbrechung auf dieser kurzen Seite ausgehend, einen durch einen Zentrierkonus (4) verlängerten Füllkanal (3) bestimmt, die beiden Folien aus weichem thermoplastischem Material auf der Außenseite jeder durch die Schweißnaht (2) gebildeten Bahn von Löchern (5) zur Mitnahme durchsetzt sind und die Beutel teilweise durch einen einzigen vorher ausgeführten Einschnitt (6) getrennt sind, der sich über einen Teil der Breite des Bandes erstreckt, um Verformungen der Beutel, insbesondere während sie gefüllt werden, ohne eine erhebliche Änderung des Mittenabstands der Löcher (5) in Längsrichtung des Bandes zu ermöglichen.

2. Vorrichtung zur Konditionierung von Portionsbeuteln aus weichem thermoplastischem Material zur künstlichen Tierbesamung, mit einer Einrichtung (13 ... 21) zum Füllen der Beutel und einer Schweißeinrichtung (22) zum Zuschweißen der Beutel nach dem Füllen, dadurch gekennzeichnet, daß sie aufweist: eine Abgabeeinrichtung, die ein aufgewickeltes Band aus leeren Beuteln trägt, eine Verteilungstrommel (7), die das Band empfängt, das durch Mitnahmezapfen (10) an der Verteilungstrommel befestigt ist, eine Wiederaufnahmetrommel (8) zur Aufnahme der gefüllten Beutel, die ebenfalls mit Mitnahmezapfen (10) und darüber hinaus mit Schneidwerkzeugen (12) zum Trennen der gefüllten Beutel versehen ist, und zwischen der Verteilungstrommel (7) und der Wiederaufnahmerolle die Fülleinrichtung (13 ... 21) und die Schweißeinrichtung (22) aufweist, wobei die Fülleinrichtung zwei Führungselemente (15) aufweist, die zwischen sich einen Durchgang begrenzen, in dem das Band angeordnet und durchgelassen wird, während es durch die Trommeln (7, 8) angetrieben wird, und der zwei Breiten aufweist, die jeweils der Dicke des gefüllten Beutels und der Dicke des den Beutel bildenden Bandes mit einem Spiel entsprechen, das die Verschiebung des Bandes ermöglicht, wobei die beiden Führungselemente ferner eine Fassung begrenzen, die zur Aufnahme eines Füllrohrs (14) für den Beutel (1) angepaßt ist.

3. Vorrichtung nach Anspruch 2, dadurch gekennzeichnet, daß die Fülleinrichtung zwei vertiefte Schalen (13) aufweist, die einander gegenüberliegend angeordnet und gegensinnig hin- und herbewegbar sind, wobei die beiden Führungselemente (15) ferner eine abgestufte Fassung begrenzen, die mit einem Anschlußkonus (17) zur Aufnahme eines Füllrohrs (14) für den Beutel (1) versehen ist.

4. Vorrichtung nach Anspruch 2, dadurch gekennzeichnet, daß die Fülleinrichtung zwei Schalen (13) aufweist, in der die beiden Führungselemente (15) angeordnet sind, die jeweils einen Durchgang mit zwei Breiten begrenzen, von denen der breitere Teil zwei Eichplatten (20) für die Dicke des gefüllten Beutels auf gleitenden Bolzen (21) enthält, die jeweils durch ein Führungselement getragen werden und mit Rückstellfedern für die Eichplatten versehen sind.
